# EUROPÄISCHE PATENTSCHRIFT

(11) **EP 1 506 887 B1**
(45) Veröffentlichungstag und Bekanntmachung des Hinweises auf die Patenterteilung: **03.03.2010**
(21) Anmeldenummer: 04019036.5
(22) Anmeldetag: 11.08.2004
(51) Int. Cl.: B60J 7/00

(54) **Schiebehimmel für ein Schiebedach eines Kraftfahrzeugs**
Sliding head-liner for a vehicle sliding roof
Panneau plafond coulissant pour toit ouvrant de véhicule

(30) Priorität: 14.08.2003 DE 20312585 U
(43) Veröffentlichungstag der Anmeldung: 16.02.2005
(73) Patentinhaber: Webasto AG, 82131 Stockdorf (DE)
(72) Erfinder: Habath, Daniel, 82380 Peissenberg (DE)
(74) Vertreter: Grünberg, Thomas

(56) Entgegenhaltungen:
- EP-A- 0 940 279
- EP-A- 1 393 943
- DE-A- 3 930 054
- DE-C- 19 534 288
- US-A- 4 717 200
- US-B1- 6 386 626

## Beschreibung

Die Erfindung betrifft einen Schiebehimmel für ein Schiebedach eines Kraftfahrzeuges mit einer im Wesentlichen starr ausgebildeten Trägerplatte und einer Be- und/oder Entlüftungsleiste, deren Längsseiten sich in Fahrzeugquerrichtung erstrecken, gemäß dem Oberbegriff des Schutzanspruches 1. Ein solcher Schiebehimmel ist aus US 6 386 626 bekannt.

Schiebehimmel dienen im Allgemeinen einerseits zur Regulierung der Be- und/oder Entlüftung des Fahrzeuginnenraumes über eine mittels eines Schiebe- oder Hubschiebedachs geöffnete Dachöffnung und andererseits zur Schwächung des über die Dachöffnung einfallenden Lichtes. Bei Schiebedächern mit transparent ausgebildeten Deckeln kann der Schiebehimmel auch bei geschlossenem Deckel die Funktion der Schwächung des Lichteinfalles übernehmen.

Herkömmlicherweise umfassen Schiebehimmel, wie sie beispielsweise in dem deutschen Gebrauchsmuster DE 202 18 549 U1 offenbart werden, einen im Wesentlichen starr ausgebildeten Himmelkörper, der eine Trägerplatte darstellt, und eine Entlüftungsleiste. Die Entlüftungsleiste ist im in Fahrtrichtung vorne liegenden Randbereich des Schiebehimmels innerhalb einer in der Trägerplatte hierfür ausgebildeten Ausnehmung angeordnet. An einem hinteren Rand der Entlüftungsleiste ist wenigstens eine Rastverbindung vorgesehen, die einem Herausbewegen eines Öffnungsrandes der Trägerplatte aus einer an dem hinteren Rand angeordneten Aufnahmenut zur Aufnahme des Öffnungsrandes entgegenwirken soll. Derartige Rastverbindungen können als Rasthaken gestaltet sein, deren Ausbildung zusätzliche Kosten bei der Herstellung des Schiebehimmels verursachen.

Da an der Entlüftungsleiste in der Regel eine Griffmulde ausgebildet ist, kann ein Benutzer bei Betätigung des Schiebehimmels direkt an der Entlüftungsleiste eingreifen, wodurch ein Verbiegen der Entlüftungsleiste und der Trägerplatte aufgrund ihrer geringen Wandstärke verursacht werden kann. Dies führt in der Regel zu Problemen bei einer beabsichtigten dauerhaften Verbindung zwischen der Trägerplatte und der darin eingesetzten Entlüftungsleiste.

Die wunschgemäß dauerhafte Anordnung der Entlüftungsleiste innerhalb der Ausnehmung der Trägerplatte erfordert nicht nur die erwähnten Rastverbindungen, sondern auch das Formen der Ausnehmung innerhalb der Trägerplatte während deren Herstellungsverfahren. Dies hat zusätzliche Herstellungskosten insbesondere aufgrund der Verwendung kostenintensiver Stanzwerkzeuge zur Folge. Zudem erfordert das Anordnen der Entlüftungsleiste, die oft als zweiteiliges Lüftungsgitter ausgebildet ist, zusätzliche Montagezeit, die wiederum zur Erhöhung der Herstellungskosten eines Schiebehimmels führt.

Häufig sind herkömmliche Trägerplatten zum Fahrzeuginnenraum hin an ihrer Unterseite mit einem Stoffmaterial aus optischen Gründen überzogen. Die Verwendung derartigen Stoffmaterials erfordert einen Stoffumbug im Bereich der Ausnehmung und an einer fahrzeugvorderseitigen Schiebehimmelkante, wodurch in diesen Bereichen häufig ein Sichlösen des Stoffes von der Trägerplatte auftritt.

Demzufolge liegt der vorliegenden Erfindung die Aufgabe zugrunde, einen Schiebehimmel für ein Schiebedach eines Kraftfahrzeuges zur Verfügung zu stellen, der einen einfachen Aufbau, geringe Herstellungskosten und hohe Formstabilität aufweist.

Diese Aufgabe wird erfindungsgemäß durch die Merkmale des Schutzanspruches 1 gelöst.

Ein wesentlicher Punkt der Erfindung liegt darin, dass bei einem Schiebehimmel für ein Schiebedach eines Kraftfahrzeuges mit einer im Wesentlichen starr ausgebildeten Trägerplatte und einer Be- und/oder Entlüftungsleiste, deren Längsseiten sich in Fahrzeugquerrichtung erstrecken, eine Längsstirnseite eines Ende der Trägerplatte mit einer Längsstirnseite eines Endes der Be- und/oder Entlüftungsleiste verbunden ist. Auf diese Weise erübrigt sich die Ausbildung von einer oder mehrerer Ausnehmung(en) innerhalb der Trägerplatte zur Aufnahme einer Be- und/oder Entlüftungsleiste. Vielmehr wird bei der vorliegenden Erfindung auf einfache Weise die Be- und/oder Entlüftungsleiste genauso breit im Bezug auf die Fahrzeugquerrichtung wie die Trägerplatte ausgebildet, so dass beide Elemente nach deren Verbindung schnell und einfach montiert mittels daran angeordneter Führungselemente in Führungsschienen, die beispielsweise mit dem Schiebedach oder einem anderen Dachelement des Fahrzeuges verbunden sein können, eingesetzt werden können.

Da sich bei dem Schiebehimmel gemäß der vorliegenden Erfindung die Ausbildung einer Ausnehmung innerhalb der Trägerplatte erübrigt und innerhalb der aus Kunststoff ausgebildeten Be- und/oder Entlüftungsleiste sowohl eine Griffmulde als auch Be- und/oder Entlüftungsschlitze bereits bei der Herstellung integral angeordnet werden können, werden die Herstellungskosten des Schiebehimmels erheblich reduziert. Nach dem Gießen der Be- und/oder Entlüftungsleiste aus einem Kunststoffmaterial muss deren fahrzeugrückseitige Längsstirnseite mit der fahrzeugvorderseitigen Längsstirnseite der Trägerplatte lediglich beispielsweise mittels einer Steckverbindung schnell miteinander verbunden werden, um den bereits fertig zusammengebauten Schiebehimmel zu erhalten. Für eine Endmontage des Schiebehimmels ist nun nur noch das Einsetzen der Führungselemente innerhalb der Führungsschiene notwendig. Somit ist aufgrund der einfachen Bauweise und Herstellung eine kostenbewusste Herstellung und schnelle Montage des Schiebehimmels möglich.

Als Verbindungsmittel zwischen den Längsstirnseiten der Trägerplatte und der Be- und/oder Entlüftungsleiste können unlösbare oder wieder lösbare Mittel verwendet werden. Beispielsweise ist die Anordnung einer Mehrzahl von an der Längsstirnseite der Trägerplatte ausgebildete Vorsprünge denkbar, deren tannenbaum- oder sägezahnförmig ausgebildete Oberflächen in komplementär dazu ausgebildete Ausnehmungen an der Längsstirnseite der Be- und/oder Entlüftungsleiste eingreifbar sind. Auf diese Weise kann ein schnelles Zusammenstecken der Be- und/oder Entlüftungsleiste und der Trägerplatte zu einem flächigen Schiebehimmel erfolgen. Hierbei sind die Be- und/oder Entlüftungsleiste und die Trägerplatte in einer gemeinsamen Ebene angeordnet.

Alternativ kann als Verbindungsmittel eine Klebeverbindung in Form einer Nut-Feder-Verbindung und/oder einer Zapfen-Loch-Verbindung verwendet werden.

Gemäß einer bevorzugten Ausführungsform ist die Trägerplatte unterseitig zum Fahrzeuginnenraum hin mit einem Stoffmaterial bedeckt, dessen fahrzeugvorderseitiges Ende zumindest teilweise zwischen den Längsstirnseiten der Trägerplatte und der Be- und/oder Entlüftungsleiste festhaltbar ist. Ein derartiges Festhalten wird beispielsweise durch Einklemmen des fahrzeugvorderseitigen Endes der Stoffbahn erreicht, indem beim Zusammenstecken der Be- und/oder Entlüftungsleiste und der Trägerplatte dieses Ende auf einfache Weise mit hineingesteckt und somit eingeklemmt wird. Somit ist die Gefahr des sich Lösens des Stoffmaterials aufgrund eines Stoffumbugs, wie es bisher üblich war, vermieden.

Da die Be- und/oder Entlüftungsleiste beidseitig mittels der Führungselemente innerhalb der Führungsschiene aufgehängt ist und somit ein im Bezug auf die Breite des Schiebehimmels durchlaufendes einstückiges Element darstellt, wird ein hohes Maß an Formstabilität des gesamten Schiebehimmels sichergestellt, wobei die Biegebeanspruchung des Schiebehimmels zusätzlich durch entsprechende - falls gewünscht nicht sichtbare - Profilausgestaltung der Leiste erhöht werden kann.

Aufgrund der integralen Anordnung der Griffmulde und der Be- und/oder Entlüftungsschlitze innerhalb der Be- und/oder Entlüftungsleiste aus dem Kunststoffmaterial ist nicht nur ein vereinfachter Aufbau sondern auch eine Reduzierung der benötigten Einzelteile für den Zusammenbau eines Schiebehimmels möglich.

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:
- Fig. 1: in einer schematischen Darstellung eine Draufsicht eines Schiebehimmels gemäß einer Ausführungsform der Erfindung, und
- Fig. 2: eine ausschnittsweise Querschnittsdarstellung des Schiebehimmels gemäß der Ausführungsform der Erfindung.

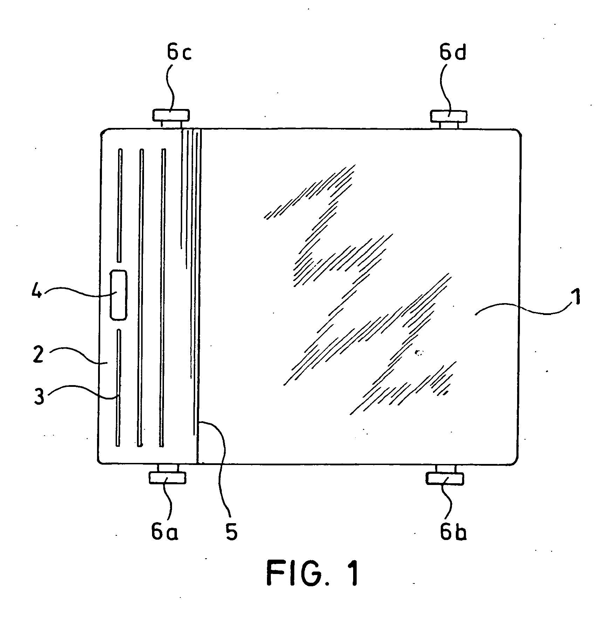

In Fig. 1 wird in einer Draufsicht schematisch ein Schiebehimmel gemäß einer Ausführungsform der Erfindung gezeigt. Ein derartiger Schiebehimmel setzt sich aus einer Trägerplatte 1, die vorzugsweise aus Strucktand-Material besteht, und einer Be- und/oder Entlüftungsleiste 2 zusammen. Die Be- und/oder Entlüftungsleiste 2 besteht aus einem Kunststoffmaterial und wird vorzugsweise im Spritzgießverfahren einstückig mit weiteren daran angeordneten Elementen, wie Be- und/oder Entlüftungsschlitze 3 sowie einer darin integral angeordneten Griffmulde 4 hergestellt.

Zwischen der Be- und/oder Entlüftungsleiste 2 und der Trägerplatte 1 besteht eine Verbindungsstelle 5, die nachfolgend noch detaillierter beschrieben werden wird.

Sowohl die Be- und/oder Entlüftungsleiste 2 als auch die Trägerplatte 1 weisen Führungselemente 6a, 6b, 6c und 6d auf, die zur gleitenden Führung des gesamten Schiebehimmels innerhalb hier nicht gezeigter Führungsschienen, welche mit einem hier nicht gezeigten Fahrzeugdach des Kraftfahrzeuges verbunden sind, dienen.

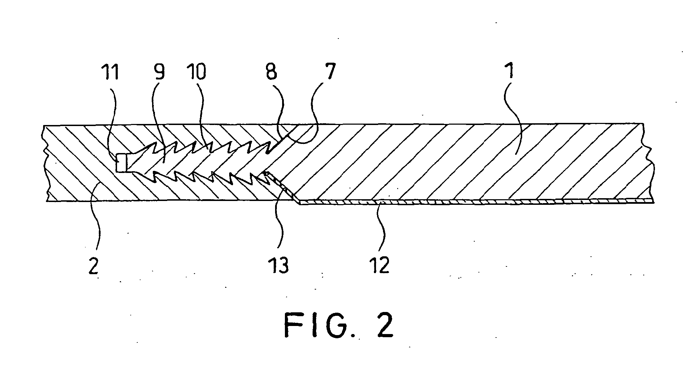

Während des Herstellungs- und Montagevorganges des erfindungsgemäßen Schiebehimmels wird die fertiggegossene Be- und/oder Entlüftungsleiste 2 an der Verbindungsstelle 5 mit der Trägerplatte 1 mittels Verbindungsmittel schnell und einfach an ihren Längsstirnseiten zusammengesetzt, so dass beide Bauteile innerhalb einer Ebene angeordnet sind. Ein derartiges Verbindungsmittel ist in der in Fig. 2 wiedergegebenen Darstellung gezeigt.

Der in Fig. 2 ausschnittsweise dargestellten Querschnittsansicht eines Schiebehimmels gemäß der Ausführungsform der Erfindung ist zu entnehmen, dass die Be- und/oder Entlüftungsleiste 2 mit einer fahrzeugrückwärtigen Längsstirnseite 7 mit der Trägerplatte 1, die eine fahrzeugvorderseitige Längsstirnseite 8 aufweist, mittels einer Verzahnungsverbindung zusammengebracht ist.

Die Verzahnungsverbindung besteht aus einer Mehrzahl von Vorsprüngen 9, deren Oberflächen 10 tannenbaumartig ausgebildet sind, um schnell in komplementär ausgebildete Ausnehmungen 11, die innerhalb der Be- und/oder Entlüftungsleiste 2 angeordnet sind, einzurasten. Hierfür wird die Trägerplatte mit den an ihrer Längsstirnseite 8 angeordneten Vorsprüngen 9 auf einfache Weise in die Ausnehmungen 11 hineingesteckt und eine dauerhafte Verbindung zwischen diesen beiden Teilen hergestellt.

Ein zum Fahrzeuginnenraum hin an der Trägerplatte 1 unterseitig angeordneter Himmelstoff 12 wird während dieses Zusammensteck-Vorganges mit seinem vorderen Ende 13 zwischen den Längsstirnseiten 7 und 8 und teilweise in die Verzahnungsverbindung mithineingeklemmt, so dass für den Betrachter das fahrzeugvorderseitige Ende 13 des Himmelstoffes 12 in optisch vorteilhafter Weise an der Verbindungsstelle zwischen der Trägerplatte 1 und der Leiste 2 im Inneren des Schiebehimmels verschwindet.

Sämtliche in den Anmeldungsunterlagen offenbarten Merkmale werden als erfindungswesentlich beansprucht, soweit sie einzeln oder in Kombination gegenüber dem Stand der Technik neu sind.

### Bezugszeichenliste

- 1: Trägerplatte
- 2: Be- und/oder Entlüftungsleiste
- 3: Be- und/oder Entlüftungsschlitze
- 4: Griffmulde
- 5: Verbindungsstelle
- 6a, 6b, 6c, 6d: Führungselemente
- 7: Längsstirnseite der Leiste 2
- 8: Längsstirnseite der Trägerplatte 1
- 9: Vorsprung
- 10: tannenbaumartige Oberfläche des Vorsprungs
- 11: Ausnehmung
- 12: Himmelstoff
- 13: fahrzeugvorderseitiges Ende des Himmelstoffes

## Patentansprüche

1. Schiebehimmel für ein Schiebedach eines Kraftfahrzeugs mit einer im Wesentlichen starr ausgebildeten Trägerplatte (1) und einer Be- und/der Entlüftungsleiste (2), deren Längsseiten sich in Fahrzeugquerrichtung erstrecken, wobei eine Längsstirnseite (8) eines Endes der Trägerplatte (1) mit einer Längsstirnseite (7) eines Endes der Be- und/oder Entlüftungsleiste (2) verbunden ist, die Be- und/oder Entlüftungsleiste (2) und die Trägerplatte (1) in Bezug auf die Fahrzeugquerrichtung die gleiche Breite aufweisen,
und
die fahrzeugvorderseitige Längsstirnseite (8) der Trägerplatte (1) und die fahrzeugrückseitige Längsstirnseite (7) der Be- und/oder Entlüftungsleiste (2) mittels Verbindungsmittel über ihre gesamten Längen lös- oder unlösbar miteinander verbunden sind, **dadurch gekennzeichnet, dass** die Verbindungsmittel eine Mehrzahl von an der Längsstirnseite (8) der Trägerplatte (1) angeordneten Vorsprüngen (9) sind, deren tannenbaum- oder sägezahnförmig ausgebildeten Oberflächen (10) in komplementär dazu ausgebildete Ausnehmungen (11) an der Längsstirnseite (7) der Be- und/oder Entlüftungsleiste (2) eingreifbar sind.

2. Schiebehimmel nach Anspruch 1,
**dadurch gekennzeichnet, dass**
die Verbindungsmittel als Klebeverbindung ausgebildet sind.

3. Schiebehimmel nach Anspruch 2,
**dadurch gekennzeichnet, dass**
die Klebeverbindung als Nut-Feder-Verbindung und/oder Zapfen-Loch-Verbindung ausgebildet ist.

4. Schiebehimmel nach einem der Ansprüche 1 - 3,
**dadurch gekennzeichnet, dass**
die Trägerplatte (1) unterseitig zum Fahrzeuginnenraum hin mit Stoffmaterial (12) bedeckt ist, dessen fahrzeugvorderseitiges Ende (13) zumindest teilweise zwischen den Längsstirnseiten (7, 8) der Trägerplatte (1) und der Be- und/oder Entlüftungsleiste (2) festhaltbar ist.

5. Schiebehimmel nach einem der vorangegangenen Ansprüche,
**dadurch gekennzeichnet, dass**
die Trägerplatte (1) und die Be- und/oder Entlüftungsleiste (2) an ihren parallel zur Fahrzeuglängsachse ausgerichteten Seitenkanten Führungselemente (6a, 6b, 6c, 6d) zu deren Gleitlagerung innerhalb von Führungsschienen aufweisen.

6. Schiebehimmel nach einem der vorangegangenen Ansprüche,
**dadurch gekennzeichnet, dass**
die Be- und/oder Entlüftungsleiste (2) aus Kunststoff ist und eine darin ausgebildete Griffmulde (4) zum Verschieben des Schiebehimmels mittels einer Handbewegung aufweist.

7. Schiebehimmel nach Anspruch 6,
**dadurch gekennzeichnet, dass**
in der Be- und/oder Entlüftungsleiste (2) aus Kunststoff integral ausgebildete Be- und/oder Entlüftungsschlitze (3) zum Zu- und/oder Abführen von Luft in den Fahrzeuginnenraum angeordnet sind.

## Claims

1. Sliding headliner for a sliding roof of a motor vehicle comprising a substantially rigidly formed carrier panel (1) and a ventilation and/or venting strip (2) whose longitudinal sides extend in the vehicle transverse direction, wherein a longitudinal terminal side (8) of one end of the carrier panel (1) is connected to a longitudinal terminal side (7) of one end of the ventilation and/or venting strip (2), the venting and/or ventilation strip (2) and the carrier panel (1) have the same width with respect to the vehicle transverse direction, and the longitudinal terminal side (8) of the carrier panel (1) on the vehicle front side and the longitudinal terminal side (7) of the ventilation and/or venting strip (2) on the vehicle rear side are connected releaseably or non-releaseably to one another over their entire lengths by means of connection means, **characterized in that** the connection means are a plurality of projections (9) which are arranged on the longitudinal terminal side (8) of the carrier panel (1) and whose fir tree-shaped or sawtooth-shaped surfaces (10) can be engaged in cutouts (11), formed in a complementary manner thereto, on the longitudinal terminal side (7) of the ventilation and/or venting strip (2).

2. Sliding headliner according to Claim 1, **characterized in that** the connection means are formed as an adhesive connection.

3. Sliding headliner according to Claim 2, **characterized in that** the adhesive connection is formed as a tongue and groove connection and/or pin and hole connection.

4. Sliding headliner according to one of Claims 1 - 3, **characterized in that** the carrier panel (1) is covered on its underside toward the vehicle interior with fabric material (12) whose end (13) on the vehicle front side can be secured at least partially between the longitudinal terminal sides (7, 8) of the carrier panel (1) and the ventilation and/or venting strip (2).

5. Sliding headliner according to one of the preceding claims, **characterized in that** the carrier panel (1) and the ventilation and/or venting strip (2) are provided, on their lateral edges oriented parallel to the vehicle longitudinal axis, with guide elements (6a, 6b, 6c, 6d) for mounting slidably within guide rails.

6. Sliding headliner according to one of the preceding claims, **characterized in that** the ventilation and/or venting strip (2) is made of plastic and has a recessed grip (4) formed therein for displacing the sliding headliner by means of a hand movement.

7. Sliding headliner according to Claim 6, **characterized in that** the ventilation and/or venting strip (2) made of plastic has integrally formed ventilation and/or venting slots (3) arranged therein for supplying and/or removing air into or from the vehicle interior.

## Revendications

1. Panneau plafond coulissant pour un toit ouvrant de véhicule automobile, comprenant une plaque porteuse (1) réalisée sous forme essentiellement rigide et une baguette de ventilation et/ou de désaérage (2), dont les côtés longitudinaux s'étendent dans la direction transversale du véhicule, un côté frontal longitudinal (8) d'une extrémité de la plaque porteuse (1) étant connecté à un côté frontal longitudinal (7) d'une extrémité de la baguette de ventilation et/ou de désaérage (2), la baguette de ventilation et/ou de désaérage (2) et la plaque porteuse (1) présentant la même largeur par rapport à la direction transversale du véhicule,
et le côté frontal longitudinal (8) de la plaque porteuse (1) du côté avant du véhicule et le côté frontal longitudinal (7) de la baguette de ventilation et/ou de désaérage (2) du côté arrière du véhicule étant connectés l'un à l'autre de manière détachable ou non détachable sur toute leur longueur au moyen de moyens de connexion,
**caractérisé en ce que** les moyens de connexion sont une pluralité de saillies (9) disposées sur le côté frontal longitudinal (8) de la plaque porteuse (1), dont les surfaces (10) réalisées en forme de sapin ou de dent de scie peuvent être engagées dans des évidements (11) réalisés de manière complémentaire à celles-ci sur le côté frontal longitudinal (7) de la baguette de ventilation et/ou de désaérage (2).

2. Panneau plafond coulissant selon la revendication 1,
**caractérisé en ce que** les moyens de connexion sont réalisés sous forme de connexion adhésive.

3. Panneau plafond coulissant selon la revendication 2,
**caractérisé en ce que**
la connexion adhésive est réalisée sous forme de connexion à rainure et languette et/ou sous forme de connexion à tourillon et trou.

4. Panneau plafond coulissant selon l'une quelconque des revendications 1 à 3,
**caractérisé en ce que**
la plaque porteuse (1) est couverte du côté inférieur par rapport à l'habitacle du véhicule avec un matériau en tissu (12) dont l'extrémité du côté avant du véhicule (13) peut être fixée au moins en partie entre les côtés frontaux longitudinaux (7, 8) de la plaque porteuse (1) et de la baguette de ventilation et/ou de désaérage (2).

5. Panneau plafond coulissant selon l'une quelconque des revendications précédentes,
**caractérisé en ce que**
la plaque porteuse (1) et la baguette de ventilation et/ou de désaérage (2) présentent, sur leurs arêtes latérales orientées parallèlement à l'axe longitudinal du véhicule des éléments de guidage (6a, 6b, 6c, 6d) en vue de leur support glissant à l'intérieur de rails de guidage.

6. Panneau plafond coulissant selon l'une quelconque des revendications précédentes,
**caractérisé en ce que**
la baguette de ventilation et/ou de désaérage (2) est en plastique et présente un creux de préhension (4) réalisé dans celle-ci pour faire coulisser le panneau plafond coulissant au moyen d'un mouvement de la main.

7. Panneau plafond coulissant selon la revendication 6,
**caractérisé en ce que**
dans la baguette de ventilation et/ou de désaérage (2) sont disposées des fentes de ventilation et/ou de désaérage (3) réalisées intégralement en plastique, pour l'alimentation et/ou l'évacuation d'air dans l'habitacle du véhicule.
